# EUROPEAN PATENT APPLICATION

(11) **EP 4 818 995 A1**
(43) Date of publication of application: **07.10.2026**
(21) Application number: 26159741.3
(22) Date of filing: 20.02.2026
(51) Int. Cl.: G06Q 10/04, G06Q 10/0631, G06Q 10/0637, G06Q 10/0633

(54) **PROCESS FLOW EVENT SEQUENCE PREDICTION**

(30) Priority: 31.03.2025 US 202519095928
(71) Applicant: Fujitsu Limited, Kawasaki-shi, Kanagawa 211-8588 (JP)
(72) Inventor: BISWAS, Biplob, Santa Clara, California, 94054 (US); UCHINO, Kanji, Santa Clara, California, 94054 (US)
(74) Representative: Hoffmann Eitle

(57) **Abstract**

According to an aspect of an embodiment, operations may include generating a first representation of a first event of a process flow corresponding to an incident. A second representation of a second event that may be a prediction of a future event to follow the first event in the process flow may be generated based on the first representation using an artificial intelligence model. A third representation of a third event that may be a prediction of a future event to follow the second event in the process flow may be generated based on the first representation and the second representation using the artificial intelligence model. A predicted event sequence for the entire process flow may be generated based on an order of the first event, the second event, and the third event as predicted.

## Description

### FIELD

The embodiments discussed herein are related to process flow behavior prediction including, for example, process flow prediction based on partial flow information using machine learning.

### BACKGROUND

Process flows are used across various industries and domains to describe a sequence of events associated with a particular incident. In some instances, process flows are designed to represent tasks and operations aimed at achieving a goal. These flows offer a structured framework for capturing and organizing events and interactions within a process, enabling clear communication and analysis. While process flows may also guide task execution, their descriptive nature allows organizations to document and understand the progression of events, decision points, and outcomes related to specific scenarios or incidents. Process flows are often visualized using diagrams, charts, or textual descriptions that illustrate each step, decision point, and their interconnections, facilitating streamlined operations, error reduction, and enhanced productivity.

The subject matter claimed herein is not limited to embodiments that solve any disadvantages or that operate only in environments such as those described above. Rather, this background is only provided to illustrate one example technology area where some embodiments described herein may be practiced.

### SUMMARY

According to an aspect of an embodiment, operations may include generating a first representation of a first event of a process flow corresponding to an incident. A second representation of a second event that may be a prediction of a future event to follow the first event in the process flow may be generated based on the first representation using an artificial intelligence model. A third representation of a third event that may be a prediction of a future event to follow the second event in the process flow may be generated based on the first representation and the second representation using the artificial intelligence model. A predicted event sequence for the entire process flow may be generated based on an order of the first event, the second event, and the third event as predicted.

The object and advantages of the embodiments will be realized and achieved at least by the elements, features, and combinations particularly pointed out in the claims. It is to be understood that both the foregoing general description and the following detailed description are exemplary and explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 illustrates an environment related to generating a predicted complete process flow based on partial process flow data, according to one or more embodiments of the present disclosure.
FIG. 2 illustrates an example system related to generating one or more event embeddings based on partial process flow data, according to one or more embodiments of the present disclosure.
FIG. 3 illustrates an example system related to generating one or more predicted event representations, according to one or more embodiments of the present disclosure.
FIG. 4 illustrates an example system related to extracting one or more predicted features from a predicted feature representation, according to one or more embodiments of the present disclosure.
FIG. 5 illustrates an example flow chart of an example method of generating a predicted sequence of events for a process flow, in accordance with one or more embodiments of the present disclosure.
FIG. 6 illustrates a block diagram of an example computing system, according to at least one embodiment of the present disclosure.

### DESCRIPTION OF EMBODIMENTS

Many organizations and systems use process flows to depict, for example, a progression of events or activities associated with a particular incident. By capturing the temporal or event-driven dynamics of processes, process flows provide a descriptive framework for organizations to model and visualize workflows, identify interdependencies, gain insights into operational patterns, and perform operations based on the process flow. Widely adopted across industries, process flows enable organizations to track how incidents unfold over time, offering clarity into complex systems without prescribing rigid execution pathways. This versatility makes process flows important for improving transparency, resolving an incident, and adapting to the unique needs of diverse operational environments.

The present disclosure relates to systems and methods for predicting process flow sequences and corresponding timing using artificial intelligence. In particular, some embodiments may include techniques for generating predicted event sequences for process flows using deep learning models.

One aspect of the disclosure provides a system for predicting future events in a process flow. The system may include an event representation module configured to generate representations for events (e.g., event embeddings) in a partial event log of an ongoing process. In these and other embodiments, a generative artificial intelligence (AI) Model (e.g., configured as an auto-regressive transformer decoder) may be used to process the event representations and generate contextual representations of predicted future events in the process flow. The system may further use classification heads to predict specific attributes of the future events based on the contextual representations.

By leveraging deep learning techniques like transformer models, the disclosed system may be able to capture long-range dependencies in event sequences and generate accurate predictions of how a process may unfold. This may help enable proactive optimization of processes by anticipating potential issues or bottlenecks before they occur. The system may also predict attributes like next activities, event durations, resources required, and overall process completion time.

The auto-regressive nature of the decoder allows the system to iteratively generate a complete predicted event sequence for the remainder of the process flow, rather than just predicting the next single event. This predicted event sequence provides a holistic view of the expected process progression that can be analyzed to detect potential deviations, deadlocks, or process re-openings.

In these and other embodiments, based on this analysis, the system may generate recommendations for resource allocation or process modifications to improve efficiency. The resource allocation and/or process modifications based on the predicted event sequence may be implemented in various ways.

For example, the system may automatically adjust staffing levels or schedules based on predicted workload. In instances in which the predicted event sequence indicates a high volume of incidents expected during a certain time period, additional staff may be scheduled for that timeframe.

In these and other embodiments, resource assignments may be optimized based on predicted event types and durations. For example, in instances in which the system predicts that certain types of complex issues are likely to arise, specialists with relevant expertise may be allocated in advance.

Additionally or alternatively, process steps may be reordered or parallelized to improve efficiency. In these and other embodiments, in instances in which the predicted sequence suggests potential bottlenecks, the workflow may be modified to distribute work more evenly.

By proactively adjusting resources and processes based on the predicted event sequence, the system may improve the efficiency of process flow completion and the use of resources to perform the process flows. The specific adjustments would be tailored to the unique needs and constraints of each business process.

The training process for the generative AI model ("the model") may involve several steps to improve its ability to perform process flow predictions. Initially, the model may be trained on a large dataset of historical event logs from completed process instances. This dataset may include sequences of events with their associated attributes such as activity names, timestamps, resources, and other relevant features.

During training, the model may learn to capture the temporal dependencies and patterns within the event sequences through its self-attention mechanism. The multi-headed attention layers may allow the model to focus on different aspects of the input sequence when making predictions.

The training process may utilize techniques such as masked language modeling, where some events in the input sequence are randomly masked and the model is tasked with predicting those masked events. This may help the model learn bidirectional context and improve its ability to fill in missing information.

The model may also be trained on multiple prediction tasks simultaneously, such as predicting the next activity, timestamp, resource allocation, and other relevant attributes. This multi-task learning approach may enable the model to develop a more comprehensive understanding of the process dynamics.

To enhance generalization, the training data may include a diverse set of process variants and edge cases. Techniques like data augmentation may be employed to artificially increase the diversity of the training examples.

The model's performance may be evaluated on a held-out validation set during training. Hyperparameters such as learning rate, batch size, and model architecture may be tuned based on the validation performance.

Through iterative training and refinement, the generative AI model may develop the capability to effectively capture long-term dependencies in event sequences, represent complex event attributes, and generate accurate predictions for future process behavior. This improved predictive capability may enable more effective online process monitoring and optimization.

Embodiments of the present disclosure will be explained with reference to the accompanying drawings.

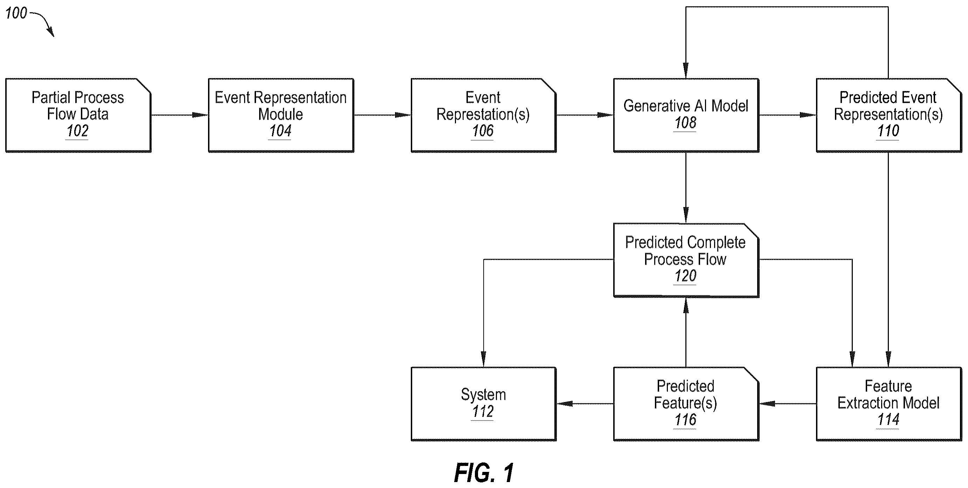

FIG. 1 illustrates an environment 100 related to generating a predicted complete process flow 120 based on partial process flow data 102, according to one or more embodiments of the present disclosure.

The partial process flow data 102 may include any data that is associated with a process flow that has not been completed yet. As used in the present disclosure, a process flow is a description of events that correspond to an incident. Reference to an "incident" in the present disclosure may refer to any category of occurrence, condition, or situation that may be resolved using action or intervention. In these and other embodiments, an incident may include a particular situation or project that may include multiple different events. For example, in the context of customer service, the incident may include a customer's device that may not be functioning properly. Continuing the example, it may be that the customer's device has multiple things wrong that need service (e.g., a broken screen, missing or broken sensors, etc.). In such an example, the overall incident-the improperly operating device-may include a series of events that occur as part of repairing or replacing the device to resolve such incident. Additionally or alternatively, an incident may refer to one situation or occurrence. For example, in the context of pedestrian transport using scooters, an incident may include a single ride on the scooter from a beginning location to a destination location. As an additional example, an incident may include a car rental, where the incident may include any events, state changes, activities, etc. that may occur from pickup of the rental car to dropping off the rental car.

In some embodiments, the partial process flow data 102 may include data associated with an unresolved incident that has not been completed yet.

In some embodiments, the partial process flow data 102 may additionally include data associated with events or activities corresponding to the incident. In these and other embodiments, such events may have been already completed. Events or activities may include any actions, changes, or occurrences that take place in relation to the incident. In some embodiments, events may include actions undertaken to address the incident, such as diagnostic testing, corrective repairs, or stakeholder communications.

In some embodiments, events and/or activities associated with the incident may move the incident towards or away from resolution. Additionally or alternatively, activities and/or events may not have an impact on whether an incident moves toward resolution or away from resolution; instead, the activities or events may describe an occurrence that may have taken place that relates to the incident.

For example, the incident may include a technical problem associated with a software program. Continuing the example, events or activities associated with the incident may include running system diagnostics, applying a software patch, and/or replacing a defective hardware component.

As an additional example, the incident may include a customer related issue-e.g., a problem that a customer may have raised in a call with a representative. Continuing the example, events and/or activities may include reaching out to the customer for additional details, escalating the issue to a specialized team, and/or issuing a refund.

In some embodiments, events may additionally include state changes, where state changes may indicate transitions in status or condition of the incident. In some embodiments, state changes may provide a high-level view of progress, such as moving from an "open" state to "in-progress" or "resolved" state. For example, a technical issue initially flagged as "unresolved" might transition to "diagnosed" following a root cause analysis, and subsequently to "resolved" once a fix has been implemented. Similarly-as another example-a customer complaint may progress from "submitted" to "under review" to "closed" after the issue has been addressed to the customer's satisfaction.

In some embodiments, a state change may be accompanied by an event or multiple events. Additionally or alternatively, a state change may not be accompanied by an event. For example, an incident may transition from a "pending" state to a "closed" state due to inactivity.

In some embodiments, while described with reference to exemplary industries, the completed process flow data 102 including, for example, incidents, events, activities, state changes, and the like may arise in a variety of industries, domains, and/or environments, including but not limited to technical systems, business processes, security contexts, customer interactions, to name a few.

In some embodiments, the partial process flow data 102 may include a partial event log. The partial event log may include various attributes (also referred to as "features" in the present disclosure) for each event indicated in the partial process flow data 102. In some embodiments, these attributes may include an event identifier, an activity name, a resource identifier, a timestamp, and/or other relevant information.

An event identifier may entail a unique alphanumeric code or label assigned to each specific event in a process flow. This identifier may serve to distinguish individual events and allow for easy reference and tracking within the system.

A resource may entail any entity, such as a person, team, software application, or hardware component, that is utilized to perform activities within the process flow. Resources may be assigned to specific events or tasks in the process.

An activity may entail a specific task, action, or step that is performed as part of a corresponding event. Activities may represent discrete units of work that contribute to progressing the process towards completion. In these and other embodiments, the activities may indicate the different state changes or statuses of the process flow corresponding to the particular event.

A comment may entail additional textual information or notes associated with a particular event or activity in the process flow. Comments may provide context, explanations, or other relevant details about the event.

A timestamp may correspond to the date and time at which a particular event or activity occurred or was recorded in the process flow. Timestamps may allow for chronological ordering and temporal analysis of events within the process.

The event log may capture the progression of the process over time, potentially spanning multiple days. For instance, the log may record events occurring from Day 1 through Day 9 of the process execution. The sequence of events may include stages indicating certain activities associated with discrete events such as:
Day 1: Open
Day 2: Acknowledged
Day 3-4: Researching
Day 5-6: Fix in progress
Day 7: Suspend - assigned to 3rd party
Day 8: Action required
Day 9: Closed

The event log may also capture branching paths and loops in the process flow. For example, after the "Action required" stage, the process may loop back to "Researching" if further investigation is needed. Alternatively, it may progress to "Fix in progress" or directly to "Closed" depending on the specific circumstances of the case.

In some embodiments, the partial process flow data 102 may be processed by an event representation module 104. The event representation module 104 may be implemented using hardware including one or more processors, central processing units (CPUs), graphics processing units (GPUs), data processing units (DPUs), parallel processing units (PPUs), microprocessors (e.g., to perform or control performance of one or more operations), field-programmable gate arrays (FPGA), application-specific integrated circuits (ASICs), accelerators (e.g., deep learning accelerators (DLAs)), and/or other processor types. In these and other embodiments, the event representation module 104 may be implemented using a combination of hardware and software.

Additionally or alternatively, the event representation module 104 may include and/or be implemented using any suitable artificial intelligence (AI) models. Some examples of AI models that may be incorporated include: recurrent neural networks (RNNs) such as long short-term memory (LSTM) networks or gated recurrent units (GRUs), Transformer models like BERT (Bidirectional Encoder Representations from Transformers) or GPT (Generative Pre-trained Transformer), convolutional neural networks (CNNs), random forests, support vector machines (SVMs), gradient boosting models like XGBoost or LightGBM, hidden Markov models, conditional random fields, Bayesian networks, Gaussian processes, deep belief networks, autoencoders, generative adversarial networks (GANs), reinforcement learning models, and ensemble methods combining multiple model types. The specific AI model architecture may be selected and customized based on the particular task, available data, and desired performance characteristics. Multiple model types may also be combined in some implementations. The AI models may be trained on historical process data to learn patterns and make predictions about future process behavior.

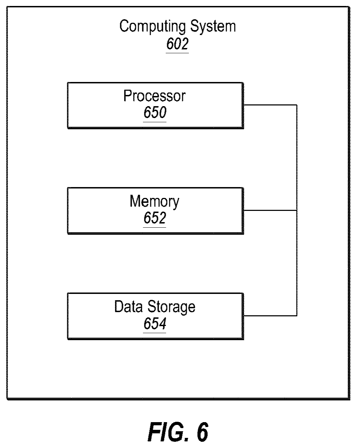

In the present disclosure, operations described as being performed by the event representation module 104 may include operations that the event representation module 104 may direct a corresponding computing system to perform. In these or other embodiments, the event representation module 104 may be implemented and/or executed by one or more computing systems, such as that described in further detail with respect to FIG. 6.

The event representation module 104 may be configured to generate one or more event representations 106 based on the partial process flow data 102. In these and other embodiments, the event representation module 104 may generate an event representation 106 for each event indicated in the partial process flow data 102.

The event representations 106 may generally represent different features of the events. In some embodiments, such representations may be generated as event embeddings that include a combination of individual feature embeddings. The individual feature embeddings may be generated for different attributes or characteristics of the events. For example, the event representations 106 may include embeddings for attributes such as activity type, resource, timestamp, case identifier, or other event metadata.

The individual feature embeddings may be combined in various ways to generate the overall event embeddings. In some implementations, the feature embeddings may be concatenated to form the event embedding. For example, for an event that has feature embeddings e1, e2, and e3 for three different attributes corresponding thereto, the overall event embedding may be [e1; e2; e3] where ";" denotes concatenation.

In these and other embodiments, the feature embeddings may be combined through element-wise operations like addition or multiplication. The event embedding may also be generated by passing the individual feature embeddings through a neural network layer to learn an optimal combination. Various pooling operations like max pooling or average pooling may also be applied to combine the feature embeddings.

In these and other embodiments, the event representations 106 may be configured to indicate the sequence of the events indicated by the partial process flow data 102. For example, the timestamps associated with the different events may be used to indicate the sequence of events and the event representations 106 may be organized according to such sequence.

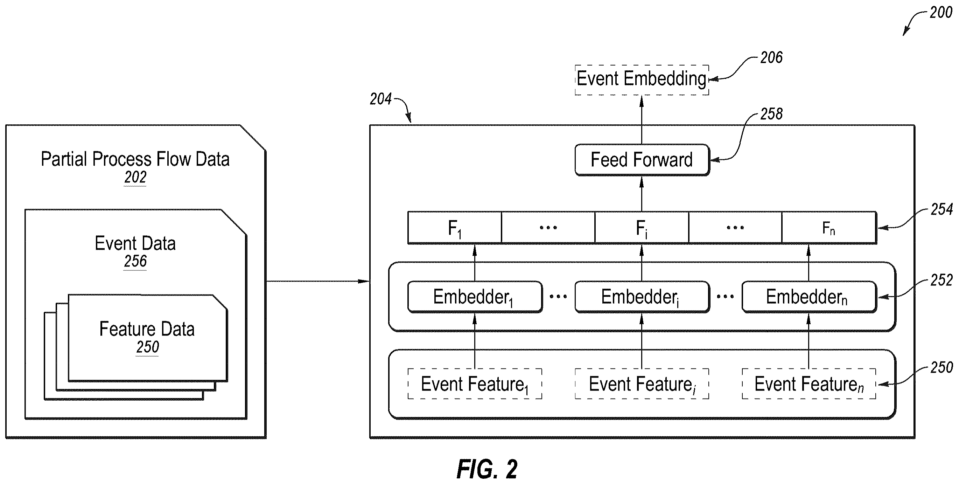

The event representations 106 generated through these embedding techniques may capture target characteristics of each event in a fixed-dimensional vector space. This may allow the subsequent components of the environment 100 to more efficiently process and analyze the partial process flow data 102. FIG. 2 illustrates a further example of generation of event embeddings that may be used as the event representations 106 in some embodiments.

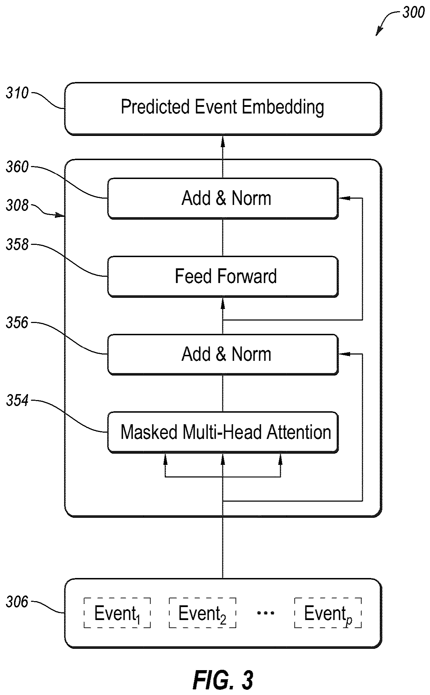

In some embodiments, the environment 100 may include a generative AI model 108 configured to analyze the event representations 106 to generate one or more predicted event representations 110. The generative AI model 108 may include any suitable AI model that may be configured to perform the operations of the generative AI model 108 described in the present disclosure. For example, in some embodiments, the generative AI model 108 may be configured as an auto-regressive transformer decoder, such as described in further detail with respect to FIG. 3.

The generative AI model 108 may take the event representations 106 of events included in the partial process flow data 102 to generate predictions of one or more future events and a corresponding sequence of such future events. Such future events may be represented as predicted event representations 110. An example of the predicted event representations 110 may be a contextual representation of the next event that may provide information about the events that may be useful in the implementation of the process flow and/or in the prediction of events and event sequences. For example, the predicted event representations 110 generated by the generative AI model 108 may capture diverse attributes of the predicted future events. For instance, the predicted event representations 110 may include predictions of the next activity, resource assignment, timestamp, duration, and other event characteristics.

For example, a particular predicted event representation 110 of a particular predicted event may include an event embedding in which the particular predicted event may be represented as a dense vector embedding that encodes information about the event's attributes and characteristics (also referred to as "features"). This embedding may be generated by the generative AI model 108 based on the context of previous events as indicated by the event representations 106.

Additionally or alternatively, in some embodiments, the particular predicted event representation 110 may include temporal information such as the predicted timestamp or duration of the particular event. This allows modeling of time-based aspects of the process flow.

In these and other embodiments, the particular predicted event representation 110 may include a sequential context for the particular predicted event. For example, the particular predicted event representation 110 may incorporate contextual information from a sequence of previous events (as indicated by the event representations 106), capturing dependencies and patterns in the process flow. In these and other embodiments, the sequential context may be encoded using attention mechanisms or other sequential modeling techniques. Additionally or alternatively, the sequential context may include positional encoding that may indicate the particular event's position in the overall sequence of events of the process flow. For example, in some embodiments, the positional encoding may provide information about where the particular event occurs relative to other events. Further, in some embodiments, the temporal information may be used and/or included in the sequential context information.

Additionally or alternatively, in some embodiments, the particular predicted event representation 110 may include task-specific information encoded therein. The task-specific information may include task-specific attributes relevant to the particular event and/or particular process flow, such as assigned resources, priority levels, or other domain-specific features that may correspond to the particular event and/or process flow.

In these and other embodiments, the particular predicted event representation 110 may include one or more probability distributions included therein. For example, rather than single point predictions, the particular predicted event representation 110 may include one or more probability distributions over possible event features, capturing uncertainty in the predictions.

Additionally or alternatively, in some embodiments, the particular predicted event representation 110 may include feature importance information. The feature importance information may indicate which input features (e.g., as indicated in the event representations 106) were most important or influential in generating the predictions for this particular event.

In these and other embodiments, the particular predicted event representation 110 may include one or more anomaly indications. The anomaly indications may include signals indicating whether the particular predicted event appears anomalous or deviates significantly from expected patterns based on historical data.

In some embodiments, the predicted event representations 110 may be combined with the event representations 106 as a recursive input to the generative AI model 108. As such, the predicted events and corresponding predicted event representations 110 may be used to predict other future events and to generate other predicted event representations 110 and a corresponding sequence of events (e.g., predicted and already occurring) until arriving at a predicted complete process flow 120.

The predicted complete process flow 120 may include a prediction of the entire process flow from the opening to the resolving of the incident corresponding to the partial process flow data 102. The predicted complete process flow 120 may predict various aspects of future events in the process. For example, the predicted complete process flow 120 may predict that the next event after "Researching" by Team C on day 4 will be "Fix in progress" by Team C on day 8. It may further predict that the process will conclude with a "Closed" event by Team C on day 11. The predicted complete process flow 120 may also identify potential issues, such as predicting a loop between events 4, 5, and 6 that could indicate a deadlock in the process. Additionally, it may predict the possibility of the process reopening, such as returning to the initial "Open" event after event 4.

For example, the predicted complete process flow 120 may predict the sequence of upcoming activities. Given a partial event log indicating that an incident has been opened and acknowledged, the generative AI model 108 may predict the next activities as Researching followed by Fix in progress and finally Closed. The generative AI model 108 may predict when each predicted activity is likely to occur.

Therefore, in some embodiments, the generative AI model 108 may perform multi-task predictions to generate various characteristics of the predicted future events and process flow. As indicated above, these multi-task predictions may include predicting the next activities, event durations, remaining time to process completion, potential deviations, deadlocks, or process re-openings. In some embodiments, the predicted complete process flow 120 may include the predicted event representations 110 that may be ordered or designated according to the orders of their corresponding events in the predicted complete process flow 120.

In some embodiments, the generative AI model 108 may include and/or be implemented as an auto-regressive decoder-only transformer model. The auto-regressive decoder-only transformer model may employ a multi-headed self-attention mechanism to capture long-term dependencies in the event sequences to obtain the predicted complete process flow 120. Further details with respect to the generative AI model 108 being implemented as an auto-regressive transformer decoder model are given with respect to FIG. 3.

The generative AI model 108 may accordingly incorporate composite information for each event (e.g., as indicated in the event representations 106) in generating the predictions. As discussed above, this composite information may include multiple attributes of each event, such as activity name, timestamp, assigned resource, work notes, comments, or other event metadata.

The predicted complete process flow 120 generated by iteratively applying the generative AI model 108 may enable analysis of the full predicted sequence. This analysis may allow for detection of potential issues like undesirable deviations, bottlenecks, or inefficiencies in the predicted future process flow.

The generative AI model 108 may be trained to use the partial process flow data 102 to generate the predicted complete process flow 120 based on complete process flow data corresponding to completed process flows. The training process may involve feeding complete process flow sequences into the generative AI model 108 and having the model learn to predict subsequent events given partial sequences as input.

For example, in some embodiments, during training, the generative AI model 108 may be provided with a prefix of events from a complete process flow and tasked with predicting the remaining sequence. The generative AI model 108 predictions may then be compared against the actual subsequent events to calculate a loss and update the generative AI model 108 parameters. This allows the generative AI model 108 to learn patterns and relationships between events in process flows.

In some embodiments, the training data may include a large corpus of complete process flows from various processes. One or more training examples may include a partial sequence of events as input and the corresponding full sequence as the target output. The generative AI model 108 may learn to map from partial sequences to complete sequences through many iterations over the training data.

The training process for the generative AI model 108 may involve various aspects in some embodiments. For example, the diverse attributes of each event in completed process flow data may be embedded into a unified vector representation. Masked self-attention may be employed in the transformer architecture to condition predictions on the partial sequence provided as input. In these and other embodiments, teacher forcing may be utilized, where the generative AI model 108 is given the correct previous event when predicting each next event during training. Additionally or alternatively, techniques like curriculum learning may be applied, where the generative AI model 108 is initially trained on shorter sequences and gradually exposed to longer and more complex process flows. In these and other embodiments, regularization techniques such as dropout may be used to improve generalization to unseen process flows.

By learning from a large dataset of complete process flows, the generative AI model 108 develops the ability to infer likely future events and patterns given an incomplete sequence. The trained generative AI model 108 may accordingly be able to take the partial process flow data 102 as input and generate predictions for subsequent events to complete the event sequence and generate the predicted process flow 120.

In some embodiments, the environment 100 may include a feature extraction module 114. The feature extraction module 114 may be implemented using hardware including one or more processors, central processing units (CPUs), graphics processing units (GPUs), data processing units (DPUs), parallel processing units (PPUs), microprocessors (e.g., to perform or control performance of one or more operations), field-programmable gate arrays (FPGA), application-specific integrated circuits (ASICs), accelerators (e.g., deep learning accelerators (DLAs)), and/or other processor types. In these and other embodiments, the feature extraction module 114 may be implemented using a combination of hardware and software.

Additionally or alternatively, the feature extraction module 114 may include and/or be implemented using any suitable artificial intelligence (AI) models. Some examples of AI models that may be incorporated include: recurrent neural networks (RNNs) such as long short-term memory (LSTM) networks or gated recurrent units (GRUs), Transformer models like BERT (Bidirectional Encoder Representations from Transformers) or GPT (Generative Pre-trained Transformer), convolutional neural networks (CNNs), random forests, support vector machines (SVMs), gradient boosting models like XGBoost or LightGBM, hidden Markov models, conditional random fields, Bayesian networks, Gaussian processes, deep belief networks, autoencoders, generative adversarial networks (GANs), reinforcement learning models, and ensemble methods combining multiple model types. The specific AI model architecture may be selected and customized based on the particular task, available data, and desired performance characteristics. Multiple model types may also be combined in some implementations. The AI models may be trained on historical process data to learn patterns and make predictions about future process behavior.

In the present disclosure, operations described as being performed by the feature extraction module 114 may include operations that the feature extraction module 114 may direct a corresponding computing system to perform. In these or other embodiments, the feature extraction module 114 may be implemented and/or executed by one or more computing systems, such as that described in further detail with respect to FIG. 6.

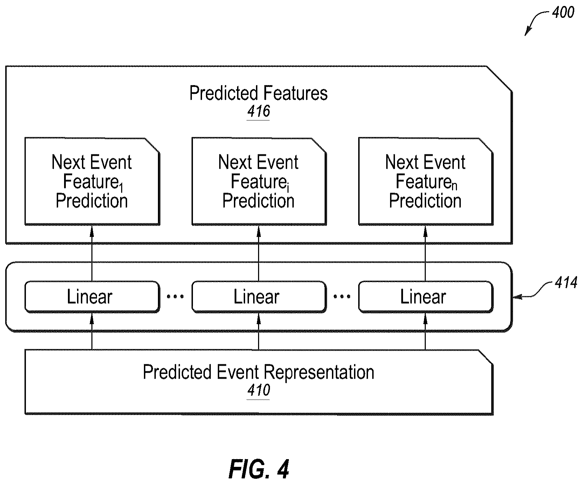

The feature extraction module 114 may be configured to extract respective predicted features 116 corresponding to the individual events represented by the predicted event representations 110 (e.g., individually as output by the generative AI model 108 and/or as included in the predicted complete process flow 120). In these and other embodiments, the predicted features 116 may indicate various features of the predicted events that are similar or analogous to the features included in the already completed events indicated by the partial process flow data 102. FIG. 4 illustrates and provides an example process that may be performed to extract the predicted features 116.

In some embodiments, the predicted complete process flow 120 and/or the predicted features 116 (generally referred to as "the predictions") may be communicated to or otherwise obtained by a system 112. The system 112 may include any suitable system, apparatus, or device configured to receive or otherwise obtain the predictions and perform one or more operations based on the predictions. In some embodiments, the system 112 may include the event representation module 104 and/or the generative AI model 108. Additionally or alternatively, the system 112 may be separate from one or more of the event representation module 104 or the generative AI model 108.

In some embodiments, the system 112 may be configured to perform one or more operations based on the predictions. For example, in the context of a customer service ticket as an ongoing process, the predictions may include data and/or information indicating the order of events that may need to occur to resolve the ticket. Based on this prediction, the system 112 may automatically allocate predicted resources for the individual events for the predicted time periods according to the predictions.

As another example, in the context of an ongoing process flow describing a car rental trip, the predictions may include data and/or information that may indicate events that may need to occur to successfully execute the car rental. In response, the system 112 may proactively adjust a rental schedule, allocate resources (e.g., personnel, vehicles, accessories, etc.) according to the predicted sequence of events and corresponding features as indicated by the predictions.

In some embodiments, the predictions may allow the system 112 to make informed decisions, improve resource allocation, improve customer satisfaction, etc. by anticipating issues before they arise and by better planning for which events may happen when and identifying what may be needed to execute and complete such events. Additionally, the system 112 may be able to trigger automated workflows, such as initiating follow-up actions, adjusting timelines, or notifying relevant parties, thus enabling the process flow to be executed smoothly and efficiently.

Modifications, additions, or omissions may be made to the environment 100 without departing from the scope of the present disclosure. For example, the order of operations performed by the various modules and components may be rearranged or performed in parallel in some embodiments. Additionally or alternatively, the event representation module 104 and generative AI model 108 may be combined into a single module in certain implementations.

Further, the specific elements illustrated in FIG. 1 may also be split into multiple subcomponents or combined in different ways. For instance, the predicted event representations 110 and predicted complete process flow 120 could be generated by separate prediction modules rather than both coming from the generative AI model 108. The partial process flow data 102 may be preprocessed or filtered before being input to the event representation module 104 in some variations of the system.

While FIG. 1 illustrates a particular arrangement of components and data flows, one skilled in the art will recognize that alternative configurations are possible that achieve similar functionality for predicting process flow completions and extracting relevant features. The core concepts of using event representations, a generative model, and feature extraction may be implemented through various architectural designs without departing from the spirit of the present disclosure.

FIG. 2 illustrates an example system 200 related to generating one or more event embeddings 206 based on partial process flow data 202, according to one or more embodiments of the present disclosure. In these and other embodiments, the system 200 may relate to the operations performed by the event representation module 104 of FIG. 1. Additionally or alternatively, the partial process flow data 202 may be analogous to the partial process flow data 102 of FIG. 1 and the event embedding 206 may be an example event representation 106 of FIG. 1. To ease explanation, the system 200 is described with respect to generating the event embedding 206 for a particular event. However, the operations described may be performed with respect to any number of events to generate any corresponding number of event embeddings.

The partial process flow data 202 may include event data 256 corresponding to the particular event. In these and other embodiments, the event data 256 may include feature data 250 indicating features associated with the particular event.

In some embodiments, the system 200 may include an event representation module 204 that may be an example of the event representation module 104 of FIG. 1. In these and other embodiments, the event representation module 204 may include an embedder layer 252 ("embedder 252") that may include multiple embedder components (Embedder1, Embedder2, ... Embedder*i*, ... , Embedder*n*) for embedding different event features (Event Feature1, Event Feature2, ... Event Feature*i*, ... ,Event Feature*n*) indicated by the feature data 250 of the event data 256. In these and other embodiments, each embedder component may generate a feature embedding for its corresponding event feature.

The embedder 252 may operate in a manner that involves multiple components and processes to generate feature embeddings for various individual features, such as Event Feature1, Event Feature2, and so forth. Each feature is fed into a corresponding embedder component, such as Embedder1, Embedder2, etc. These components are specially designed to handle the specific types of feature data they receive.

For instance, lookup tables may be employed with respect to embedder components that process feature data 250 corresponding to categorical features, where each category is mapped to a learned vector representation. In these and other embodiments, embedder components that process feature data 250 corresponding to numerical features may include fully connected neural network layers. These layers are capable of projecting numerical features into a higher-dimensional space.

Furthermore, embedder components that process feature data 250 corresponding to features that are sequential or textual in nature may include specialized neural networks such as convolutional or recurrent neural networks may be utilized. These networks are adept at processing data that comes in sequences, such as text or time series, and can capture the temporal dynamics or contextual nuances present in such data.

In some embodiments, the output from each embedder component may be a vector representation of the respective feature. In these and other embodiments, once individual feature embeddings are generated, they may be combined to form a combined feature embedding 254. This combination could be achieved through methods like concatenation or element-wise addition. Concatenation involves joining the embeddings end-to-end, which preserves the individual feature representations within the larger embedding. On the other hand, element-wise addition merges the embeddings by adding corresponding elements together, which can help in emphasizing shared characteristics among the features. The combined feature event embedding 254 may represent a comprehensive encoding of the particular event.

In some embodiments, the combined feature event embedding 254 may be further processed through a feed forward section 258 of the event representation module 204. The feed forward section 258 may include one or more feed forward layers that may process the combined feature event embeddings 254 to capture interactions between features. For example, in some embodiments, the feed forward section 258 may include a feed forward neural network.

The feed forward section 258 processes the combined feature event embeddings by applying a series of transformations designed to capture the interactions between the features. Each transformation within the feed forward section 258 may include a linear transformation followed by a non-linear activation function. This may allow the feed forward section 258 to learn complex patterns and dependencies between the embedded features of the particular event.

In some embodiments, the feed forward section 258 may include multiple layers, each configured to progressively refine the feature interactions. The output of each layer may be passed to a subsequent layer, allowing for the construction of a deep representation of the interactions. This hierarchical processing helps in capturing both low-level and high-level feature interactions.

The output of the feed forward section 258 may be the event embedding 206, which may include a refined set of feature embeddings that represent the combined and interacted features of the particular event. In these and other embodiments, the event embedding 206 may be configured as a fixed-dimensional vector that represents the entire event, incorporating information from all of its constituent features.

This embedding process may allow a generative AI model (e.g., the generative AI model 108) to effectively process the particular event and/or other events that may be indicated in the partial process flow data 202. For example, the event embedding 206 may capture semantic relationships between feature values, allowing the generative AI model to generalize across similar events.

While FIG. 2 illustrates a particular arrangement of components and data flows, one skilled in the art will recognize that alternative configurations are possible that achieve similar functionality for predicting process flow completions and extracting relevant features. The core concepts of generating the event embedding 206 may be implemented through various architectural designs without departing from the spirit or scope of the present disclosure.

FIG. 3 illustrates an example system 300 related to generating one or more predicted event representations, according to one or more embodiments of the present disclosure. In these and other embodiments, the system 300 may relate to the operations performed by the generative AI model 108 of FIG. 1.

In some embodiments, the system 300 may include an auto-regressive transformer decoder 308 ("decoder 308") that may be an example of the generative AI model 108 of FIG. 1. In these and other embodiments, the decoder 308 may be configured to process a partial event sequence 306 ("event sequence 306") to generate a predicted event embedding 310, which may be an example predicted event representation 110 of FIG. 1.

The event sequence 306 may include event embeddings of already completed events and/or already predicted events. The event sequence 306 may indicate the ordered relationships between the corresponding events. In these and other embodiments, the ordered nature of the event sequence 306 preserves the temporal relationships between events. Each event embedding may encode information about when that event occurred relative to other events in the sequence. This temporal ordering may accordingly provide context for the decoder 308 when predicting subsequent events.

In some instances, the event sequence 306 may include event embeddings for a series of events that have already occurred in an ongoing process or incident (e.g., one or more event embeddings such as event embedding 206 of FIG. 2). Additionally or alternatively, the event sequence 306 may include embeddings for events that have been previously predicted but have not yet actually occurred (e.g., one or more previously determined predicted event embeddings that were previously determined by the decoder 308 according to the operations described herein). For example, the event sequence 306 may include embeddings for Event 1, Event 2, up to Event *p,* where *"p"* represents the most recent event that has occurred and been logged or the most recently predicted event. This allows the encoder 308 to build upon its own predictions when predicting subsequent events in the sequence. In the present disclosure, reference to the "event sequence 306" may also refer to any data corresponding thereto (e.g., the events included in the event sequence 306 and data corresponding thereto-such as feature data corresponding to the events included in the event sequence 306). Further, the term "event sequence 306" may be used to refer to data corresponding the event sequence 306 following processing of such data by one or more intermediate components of the decoder 308.

The decoder 308 may process the event sequence 306 to generate the predicted event embedding 310 through a series of operations. For example, in some embodiments, the decoder 308 may process the event sequence 306 using a masked multi-head self-attention layer 354 ("attention layer 354"). The attention layer 354 may help ensure that the decoder 308 only uses information from events included in the event sequence 306 when making predictions.

In these and other embodiments, after the attention layer 354, the decoder 308 may apply normalization layers 356 and 360 and a feed-forward layer 358 to the event sequence 306. These layers may help transform the attended representations from the attention layer 354 and extract higher-level features. The decoder 308 may repeat this process of self-attention followed by feed-forward layers multiple times, with each repetition referred to as a decoder iteration.

As the event sequence data flows through the decoder iteration, it may become increasingly contextualized based on the full sequence history. The final iteration may produce a contextual representation for a predicted event that may be predicted as the next event in the event sequence 306. Such a contextual representation may be projected into a particular embedding space (e.g., as a particular vector type) that may be output as the predicted event embedding 310. The predicted event embedding 310 may represent the prediction for the next event in the event sequence 306.

By processing the event sequence 306 in this autoregressive manner, the decoder 308 may effectively model the dependencies between events and generate predictions that take into account the full contextual history. The masked attention and layer-wise processing allow the decoder 308 to build up increasingly sophisticated representations for making accurate next-event predictions.

While FIG. 3 illustrates a particular arrangement of components and data flows, one skilled in the art will recognize that alternative configurations are possible that achieve similar functionality for predicting process flow completions and extracting relevant features. The core concepts of generating the predicted event embedding 310 may be implemented through various architectural designs without departing from the spirit or scope of the present disclosure.

FIG. 4 illustrates an example system 400 related to extracting one or more predicted features 416 from a predicted feature representation 410, according to one or more embodiments of the present disclosure. In these and other embodiments, the system 400 may relate to the operations performed by the feature extraction module 114 of FIG. 1.

In some embodiments, the system 400 may include feature extraction module 414 that may be an example of the feature extraction module 114 of FIG. 1. In these and other embodiments, the feature extraction module 414 may be configured to process a particular predicted event representation 410 to extract one or more predicted features 416. To ease explanation, the system 400 is described with respect to extracting the predicted features 416 for the particular predicted event representation 410. However, the operations described may be performed with respect to any number of predicted event representations to generate any corresponding number of predicted features 416.

The predicted event representation 410 may be analogous to the predicted event representation 110 of FIG. 1 and/or the predicted event embedding 310 of FIG. 3. As such, the predicted event representation 410 may be organized as a vector that may represent the different features of a corresponding particular event. In general, the feature extraction module 414 may be configured to dissect such a vector and extract information corresponding to the different features that may be encoded in the predicted event representation 410.

For example, in some embodiments, the feature extraction module 414 may receive the predicted event representation 410 as a high-dimensional vector encoding information about the predicted particular event.

The feature extraction module 414 may then apply a series of linear transformations to this vector representation. Each linear transformation may correspond to a different feature of interest, such as the event type, timestamp, resource allocation, or other relevant attributes. These linear transformations may project the high-dimensional representation onto lower-dimensional spaces that correspond to the individual features.

After the linear transformations, the feature extraction module 414 may apply activation functions to the outputs. These activation functions may help capture non-linear relationships in the data and map the outputs to appropriate ranges for each feature type. For example, for categorical features like event type, a softmax activation may be used to produce probability distributions over possible categories. Additionally or alternatively, for numerical features like timestamps, a different activation like ReLU or sigmoid may be more appropriate.

The feature extraction module 414 may also incorporate additional processing steps tailored to specific feature types. For example, it may apply normalization techniques to ensure numerical predictions fall within expected ranges based on the training data statistics. For categorical features, it may incorporate thresholding to produce discrete predictions from probability distributions.

The next event feature prediction components of the predicted features 416 may include a variety of information about the particular features that may be predicted for the particular predicted event corresponding to the predicted event representation 410. For example, different "next event feature predictions" may include predictions for the event type or activity, providing probabilities for different possible activities that may occur as part of such an event. In these and other embodiments, such predictions may also include temporal information, such as the expected timestamp of the next event or the duration until it occurs.

Additionally or alternatively, the next event feature predictions may include resource-related predictions, which for example, may potentially indicate which team, individual, or system is likely to be involved in the particular predicted event. The feature predictions may also include estimates of various performance metrics or key performance indicators relevant to the specific process being modeled. Additionally, the next event feature predictions may include predicted attributes like priority levels, status indicators, or other domain-specific characteristics of events in the given process context.

In some implementations, the feature predictions 416 may also include confidence scores or uncertainty estimates associated with each predicted next event feature. This may provide valuable information about the reliability of different aspects of the prediction, allowing for more informed decision making.

While FIG. 4 illustrates a particular arrangement of components and data flows, one skilled in the art will recognize that alternative configurations are possible that achieve similar functionality for predicting process flow completions and extracting relevant features. The core concepts of extracting the predicted features 416 may be implemented through various architectural designs without departing from the spirit or scope of the present disclosure.

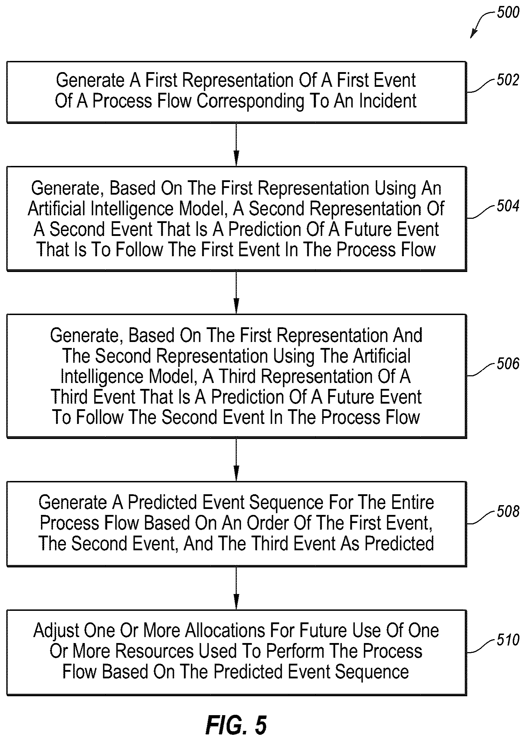

FIG. 5 illustrates an example flow chart of an example method 500 of generating a predicted sequence of events for a process flow, in accordance with one or more embodiments of the present disclosure. One or more operations of the method 500 may be implemented using any suitable system, apparatus, or device such as those described with respect to FIGS. 1-4 and/or FIG. 6. Although illustrated as discrete steps, various steps of the method 500 may be divided into additional steps, combined into fewer steps, or eliminated, depending on the desired implementation. Additionally, the order of performance of the different steps may vary depending on the desired implementation.

The method 500 may include block 502. At block 502, a first representation of a first event of a process flow corresponding to an incident may be generated. This operation may correspond to the event representation module 104 in FIG. 1 generating an event representation 106 for an event from the partial process flow data 102.

At block 504, the method may include generating, based on the first representation using an artificial intelligence model, a second representation of a second event that is a prediction of a future event that is to follow the first event in the process flow. This operation may utilize the generative AI model 108 illustrated in FIG. 1 to generate the predicted event representation 110 based on the event representations 106.

At block 506, the method may include generating, based on the first representation and the second representation using an artificial intelligence model, a third representation of a third event that is a prediction of a future event to follow the second event in the process flow. This operation may involve the generative AI model 108 predicting another predicted event representation 110 based on one or more previously generated predicted event representations 110 and the event representations 106.

At block 508, the method may include generating a predicted event sequence for the process flow, as a whole (e.g., the entire process flow), based on an order of the first event, the second event, and the third event as predicted. This operation may correspond to generating the predicted complete process flow 120 illustrated in FIG. 1.

At block 510, the method may include adjusting one or more allocations for future use of one or more resources used to perform the process flow based on the predicted event sequence. This operation may involve using the system 112 in FIG. 1 to analyze the predicted complete process flow 120 and make resource allocation adjustments based on the predicted features 116.

Modifications, additions, or omissions may be made to the method 500 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

For instance, in some embodiments the method 500 may include additional operations that may be performed in conjunction with or as part of the operations illustrated in FIG. 5.

For example, in some embodiments, the method 500 may further include extracting, based on the second representation, feature data corresponding to the second event and including information corresponding to a plurality of second features corresponding to the second event. This operation may be performed by the feature extraction module 114 illustrated in FIG. 1. The extracted feature data may include various attributes of the predicted second event, such as activity type, resource allocation, timing information, or other relevant characteristics.

In these and other embodiments, at least one of the one or more resources for the adjusting of the one or more allocations may be identified based on the second feature data. This operation may utilize the extracted feature data to determine which specific resources may need allocation adjustments based on the predicted characteristics of the second event.

Additionally or alternatively, the method 500 may further include obtaining first feature data corresponding to the first event, wherein the first feature data includes first information corresponding to a plurality of first features corresponding to the first event. This operation may involve processing the partial process flow data 102 illustrated in FIG. 1 to extract relevant features from the first event.

In these and other embodiments, the first representation may be generated based on the first feature data. This operation may utilize the event representation module 104 illustrated in FIG. 1 to create an embedding or other suitable representation of the first event based on its extracted features.

Additionally or alternatively, the method 500 may further include generating the first representation based on the first feature data by generating individual embeddings for individual first features of the plurality of first features. This operation may correspond to the individual embedder components illustrated in layer 252 of FIG. 2, where each feature is processed separately. In these and other embodiments, the method 500 may include combining the individual embeddings into the first representation, such as described with respect to FIG. 2.

In these and other embodiments, the artificial intelligence model used in the method 500 may be trained based on features extracted from a plurality of completed events individually corresponding to a plurality of completed incidents. This training data may be derived from historical process logs of fully completed incidents, such as described with respect to the training of the generative AI model 108 of FIG. 1.

Additionally or alternatively, the training may be based on event sequences of the completed events as corresponding to individual completed incidents. This training data may include the full sequences of events from start to finish for multiple historical incidents, such as also described with respect to the training of the generative AI model 108 of FIG. 1.

FIG. 6 illustrates a block diagram of an example computing system 602, according to at least one embodiment of the present disclosure. The computing system 602 may be configured to implement or direct one or more suitable operations described in the present disclosure. In some embodiments, the computing system 602 may be used to control operations related to generating training data (e.g., labels and/or features for training one or more machine learning models). The computing system 602 may include a processor 650, a memory 652, and a data storage 654. The processor 650, the memory 652, and the data storage 654 may be communicatively coupled.

In general, the processor 650 may include any suitable computer, computing entity, or processing device including various computer hardware or software modules and may be configured to execute instructions stored on any applicable computer-readable storage media. For example, the processor 650 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 6, the processor 650 may include any number of processors configured to, individually or collectively, perform or direct performance of any number of operations described in the present disclosure. Additionally, one or more of the processors may be present on one or more different electronic devices, such as different servers.

In some embodiments, the processor 650 may be configured to interpret and/or execute program instructions and/or process data stored in the memory 652, the data storage 654, or the memory 652 and the data storage 654. In some embodiments, the processor 650 may fetch program instructions from the data storage 654 and load the program instructions in the memory 652. After the program instructions are loaded into memory 652, the processor 650 may execute the program instructions.

The memory 652 and the data storage 654 may include computer-readable storage media for carrying or having computer-executable instructions or data structures stored thereon. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM)or other optical disk storage, magnetic disk storage or other magnetic storage devices, flash memory devices (e.g., solid state memory devices), or any other non-transitory storage medium which may be used to store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision of *In re Nuijten,* 500 F.3d 1346 (Fed. Cir. 2007).

Combinations of the above may also be included within the scope of computer-readable storage media. Computer-executable instructions may include, for example, instructions and data configured to cause the processor 650 to perform a certain operation or group of operations.

Modifications, additions, or omissions may be made to the computing system 602 without departing from the scope of the present disclosure. For example, in some embodiments, the computing system 602 may include any number of other components that may not be explicitly illustrated or described.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method comprising:
generating a first representation of a first event of a process flow corresponding to an incident;
generating, based on the first representation using an artificial intelligence model, a second representation of a second event that is a prediction of a future event that is to follow the first event in the process flow;
generating, based on the first representation and the second representation and using the artificial intelligence model, a third representation of a third event that is a prediction of a future event to follow the second event in the process flow;
generating a predicted event sequence for the entire process flow based on an order of the first event, the second event, and the third event as predicted; and
adjusting one or more allocations for future use of one or more resources used to perform the process flow based on the predicted event sequence.

2. The method of claim 1, further comprising:
extracting, based on the second representation, feature data corresponding to the second event and including information corresponding to a plurality of second features corresponding to the second event; and
identifying at least one of the one or more resources for the adjusting of the one or more allocations based on the feature data.

3. The method of claim 1, wherein the first event has already been completed.

4. The method of claim 1, wherein the first event is a future event that has not yet occurred.

5. The method of claim 1, further comprising obtaining first feature data corresponding to the first event, wherein the first feature data includes first information corresponding to a plurality of first features corresponding to the first event and wherein the first representation is generated based on the first feature data.

6. The method of claim 5, wherein the first representation is generated based on the first feature data at least by:
generating individual embeddings for individual first features of the plurality of first features; and
combining the individual embeddings into the first representation.

7. The method of claim 1, wherein the artificial intelligence model is trained based on one or more of:
features extracted from a plurality of completed events individually corresponding to a plurality of completed incidents; or
event sequences of the completed events as corresponding to individual completed incidents.

8. One or more non-transitory computer-readable media storing instructions that, in response to being executed by one or more processors, cause a system to perform operations comprising:
generating a first representation of a first event of a process flow corresponding to an incident;
generating, based on the first representation using an artificial intelligence model, a second representation of a second event that is a prediction of a future event that is to follow the first event in the process flow;
generating, based on the first representation and the second representation and using the artificial intelligence model, a third representation of a third event that is a prediction of a future event to follow the second event in the process flow;
generating a predicted event sequence for the entire process flow based on an order of the first event, the second event, and the third event as predicted; and
adjusting one or more allocations for future use of one or more resources used to perform the process flow based on the predicted event sequence.

9. The non-transitory computer-readable media of claim 8, wherein the operations further comprise:
extracting, based on the second representation, feature data corresponding to the second event and comprising information corresponding to a plurality of second features corresponding to the second event; and
identifying at least one of the one or more resources for the adjusting of the one or more allocations based on the feature data.

10. The non-transitory computer-readable media of claim 8, wherein the first event has already been completed.

11. The non-transitory computer-readable media of claim 8, wherein the first event is a future event that has not yet occurred.

12. The non-transitory computer-readable media of claim 8, wherein the operations further comprise obtaining first feature data corresponding to the first event, wherein the first feature data comprises first information corresponding to a plurality of first features corresponding to the first event and wherein the first representation is generated based on the first feature data.

13. The non-transitory computer-readable media of claim 12, wherein the first representation is generated based on the first feature data at least by:
generating individual embeddings for individual first features of the plurality of first features; and
combining the individual embeddings into the first representation.

14. The non-transitory computer-readable media of claim 8, wherein the artificial intelligence model is trained based on one or more of:
features extracted from a plurality of completed events individually corresponding to a plurality of completed incidents; or
event sequences of the completed events as corresponding to individual completed incidents.

15. A system comprising:
one or more processors; and
one or more computer-readable media storing computer-executable instructions that, in response to being executed by the one or more processors, cause the one or more processors to perform operations comprising:
generating a first representation of a first event of a process flow corresponding to an incident;
generating, based on the first representation using an artificial intelligence model, a second representation of a second event that is a prediction of a future event that is to follow the first event in the process flow;
generating, based on the first representation and the second representation using the artificial intelligence model, a third representation of a third event that is a prediction of a future event to follow the second event in the process flow;
generating a predicted event sequence for the entire process flow based on an order of the first event, the second event, and the third event as predicted; and
adjusting one or more allocations for future use of one or more resources used to perform the process flow based on the predicted event sequence.

16. The system of claim 15, wherein the operations further comprise:
extracting, based on the second representation, feature data corresponding to the second event and including information corresponding to a plurality of second features corresponding to the second event; and
identifying at least one of the one or more resources for the adjusting of the one or more allocations based on the feature data.

17. The system of claim 15, wherein the first event has already been completed.

18. The system of claim 15, wherein the first event is a future event that has not yet occurred.

19. The system of claim 15, wherein the operations further comprise obtaining first feature data corresponding to the first event, wherein the first feature data includes first information corresponding to a plurality of first features corresponding to the first event and wherein the first representation is generated based on the first feature data.

20. The system of claim 19, wherein the first representation is generated based on the first feature data at least by:
generating individual embeddings for individual first features of the plurality of first features; and
combining the individual embeddings into the first representation.
